# EUROPEAN PATENT APPLICATION

(11) **EP 3 373 228 A1**
(43) Date of publication of application: **12.09.2018**
(21) Application number: 18157330.4
(22) Date of filing: 19.02.2018
(51) Int. Cl.: G06Q 30/06

(54) **TRANSACTION METHOD OF ONLINE SHOPPING AND TRANSACTION SYSTEM THEREOF**

(30) Priority: 10.03.2017 TW 106108039
(71) Applicant: Lee, Hao-Chieh, 328 Taoyuan City (TW)
(72) Inventor: Lee, Hao-Chieh, 328 Taoyuan City (TW)
(74) Representative: Strasser, Wolfgang

(57) **Abstract**

A transaction method of online shopping and a transaction system (100, 300) thereof are provided. A buyer and a seller respectively deposit guarantee money (or membership fee) to a third party financial institution (120, 320) and store information used to identify the buyer and the seller to the third party financial institution (120, 320) in advance, and a shopping platform (110, 310) provides the buyer and the seller with the qualification for conducting online transactions at the shopping platform (110, 310). After the online transactions are completed (i.e., the transactions between the buyer and the seller are correctly completed), the third party financial institution (120, 320) respectively returns the guarantee money (or the deposited membership fee) to the buyer and the seller. Accordingly, the present disclosure is advantageous to minimize the risk of fraudulent buyers and sellers, thereby protecting financial transactions conducted between the both parties.

## Description

### BACKGROUND

### 1. Technical Field

The present disclosure relates to a transaction method of online shopping and a transaction system thereof, in particular, to a transaction method of online shopping and a transaction system thereof capable of protecting financial transactions conducted between both parties.

### 2. Description of Related Art

For the sake of protecting the rights between both parties, paying and receiving cash mostly depend on cash flow platforms, namely, third party financial institutions when conducting online transactions. For example, a buyer orders desired merchandise at a shopping platform and then remits a transaction amount to a third party financial institution, such as a specific bank account, a seller is notified by the third party financial institution to ship the ordered merchandise to the buyer when the remittance to the third party financial institution is confirmed.

A third party financial institution can protect the right of the buyer, whereas the seller's right would be prejudiced. For example, when a first buyer orders first merchandise at a shopping platform, a third party financial institution provides the first buyer with a first merchandise account. Then, the first buyer deliberately establishes second merchandise which is false at the shopping platform and designates the first merchandise account as the remittance account. After that, when a second buyer orders the second merchandise and remits the transaction amount to the remittance account designated by the first buyer, the third party financial institution notifies the first seller to ship the first merchandise to the first buyer, and as a result the first buyer gains the first merchandise by cheating and the second buyer loses the transaction amount. In addition, the account of the first seller may accordingly show abnormality due to the unusual transaction.

Consequently, conventional online shopping methods are incapable of protecting the rights between both parties at the same time.

### SUMMARY

The primary purpose of the present disclosure is to provide a transaction method of online shopping and a transaction system thereof, in which a buyer and a seller respectively deposit guarantee money (or membership fee) in a third financial institution and store information (e.g. security authentication code or biometric recognition information) used to identify the buyer and the seller to the third financial institution in advance to minimize the risk of fraudulent buyers and sellers.

The transaction method of online shopping provided in the present disclosure is adapted to a transaction system, and includes a shopping platform and a third party financial host, wherein the method comprises the following steps: (a) a buyer and a seller respectively depositing guarantee money and storing buyer information and seller information to the third party financial host, and the shopping platform provides the buyer and the seller with the qualification for conducting online transactions at the shopping platform; (b) after the buyer orders desired merchandise through the shopping platform and remits a transaction amount to the third party financial host, the third financial host notifying the seller to ship the ordered merchandise to the buyer through the shopping platform; (c) the shopping platform determining whether a shipment notice and the seller information sent by the seller are received; if the determination is positive, the shopping platform activating a counter to count a predetermined time; (d) the shopping platform determining whether a delivery and collection notice and the buyer information sent by the buyer are received within the predetermined time; if the determination is positive, the shopping platform activating the counter to count a cooling-off period; (e) when the shopping platform receives a customer satisfaction degree within the cooling-off period or after expiration of the cooling-off period, the shopping platform instructing the third party financial host to transfer the transaction amount to the seller; and (f) the shopping platform instructing the third party financial host to respectively return the guarantee money to the buyer and the seller.

The present disclosure further provides a transaction system of online shopping which includes a shopping platform and a third party financial host. The shopping platform is connected to a buyer station and a seller station. The third party financial host is connected to the buyer station, the seller station and the shopping platform, and receives guarantee money respectively deposited by the buyer and the seller and buyer information and seller information respectively stored by the buyer and the seller, and the shopping platform provides the buyer and the seller with the qualification for conducting online transactions at the shopping platform. After the buyer orders desired merchandise through the shopping platform and remits a transaction amount to the third party financial host, the third financial host notifies the seller to ship the ordered merchandise to the buyer through the shopping platform. The shopping platform is used to execute the following steps: (a) the shopping platform determining whether a shipment notice and the seller information sent by the seller are received; if the determination is positive, the shopping platform activating a counter to count a predetermined time; (b) the shopping platform determining whether a delivery and collection notice and the buyer information sent by the buyer are received within the predetermined time; if the determination is positive, the shopping platform activating the counter to count a cooling-off period; (c) when the shopping platform receives a customer satisfaction degree within the cooling-off period or after expiration of the cooling-off period, the shopping platform instructing the third party financial host to transfer the transaction amount to the seller; and (d) the shopping platform instructing the third party financial host to respectively return the guarantee money to the buyer and the seller.

To sum up, a buyer and a seller respectively deposit guarantee money (or membership fee) to a third party financial institution and store information (e.g. security authentication code or biometric recognition information) used to identify the buyer and the seller to the third party financial institution in advance, and a shopping platform provides the buyer and the seller with the qualification for conducting online transactions at the shopping platform. After the online transactions are completed (i.e., the transactions between the buyer and the seller are correctly completed), the third party financial institution respectively returns the guarantee money (or the deposited membership fee) to the buyer and the seller. Accordingly, a transaction method of online shopping and a transaction system thereof provided by the present disclosure is advantageous to minimize the risk of fraudulent buyers and sellers, thereby protecting financial transactions conducted between the both parties.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a schematic diagram illustrating a transaction system of online shopping of an embodiment of the present disclosure.
FIG. 2 is a flow chart illustrating a transaction method of online shopping of an embodiment of the present disclosure.
FIG. 3A is a schematic diagram illustrating how a buyer and a seller of an embodiment of the present disclosure are qualified to conduct online transactions at a shopping platform.
FIG. 3B is a schematic diagram illustrating a buyer of an embodiment of the present disclosure buying merchandise.
FIG. 3C is a schematic diagram illustrating a buyer of an embodiment of the present disclosure expressing the customers satisfaction degree.
FIG. 3D is a schematic diagram illustrating a buyer and a seller of an embodiment of the present disclosure withdrawing from a shopping platform.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

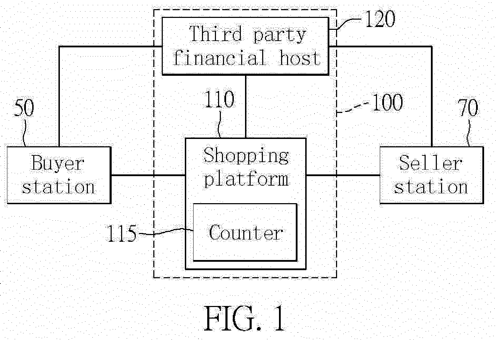

Reference is made to FIG. 1. FIG. 1 is a schematic diagram illustrating a transaction system of online shopping of an embodiment of the present disclosure. As shown in FIG. 1, a transaction system of online shopping 100 includes a shopping platform 110 and a third party financial host 120. The shopping platform 110 is connected to a buyer station 50 and a seller station 70. Further, the seller provides at least one piece of merchandise to the shopping platform 110 through the seller station 70, and the buyer can order desired merchandise displayed at the shopping platform 110 through the buyer station 50. In the present embodiment, the shopping platform 110 is exemplified as a server host used to execute online shopping services, and the present disclosure is not limited thereto.

The third party financial host 120 is connected to the buyer station 50, the seller station 70 and the shopping platform 110, and receives guarantee money respectively deposited by the buyer and the seller and buyer information and seller information respectively stored by the buyer and the seller. After the third party financial host 120 receives the guarantee money respectively deposited by the buyer and the seller and the buyer information and the seller information respectively stored by the buyer and the seller, the third party financial host 120 informs the shopping platform 110 that the guarantee money and the buyer information and the seller information have been received, and then the shopping platform 110 provides the buyer and the seller with the qualification for conducting online transactions at the shopping platform 110.

Specifically, the buyer and the seller can deposit the guarantee money and store the buyer information and the seller information to the third party financial host 120 before or after the online transactions are completed, or any time point before the merchandise ordered by the buyer is shipped to the buyer, and the present disclosure is not limited thereto. In the present embodiment, the buyer information may be security authentication code or biometric recognition information (e.g. fingerprint information or facial information) used exclusively to identify the buyer. Similarly, the seller information may be security authentication code or biometric recognition information (e.g. fingerprint information or facial information) used exclusively to identify the seller. Consequently, the risk of fraudulent buyers and sellers in the transaction process at the shopping platform 110 can be minimized by virtue of the buyer information and seller information.

When the shopping platform 110 receives a merchandise order from the buyer and the buyer remits a transaction amount to the third party financial host 120 through the buyer station 50, the third party financial host 120 notifies the seller through the shopping platform 110 to ship the ordered merchandise to the buyer. After that, the shopping platform 110 further determines whether a shipment notice and the seller information sent by the seller are received. In the present embodiment, the shipment notice can be a shipping note provided to the seller by a logistics company, or a shipment mechanism built between the shopping platform 110 and the seller, and the present disclosure is not limited thereto.

When the shopping platform 110 receives the shipment notice and the seller information sent by the seller, the seller completes the shipment procedures. After that, the shopping platform 110 activates a counter 115 disposed therein to count a predetermined time (e.g. within five days) which is served as a period of time for tracing the delivery and collection procedures of the ordered merchandise. If the shopping platform 110 does not receive the shipment notice and the seller information sent by the seller, it means that the seller does not complete the shipment procedures yet. The shopping platform 110 continues to trace the shipment procedures of the ordered merchandise.

After the seller completes the shipment procedures, the shopping platform 110 determines whether a delivery and collection notice and the buyer information sent by the buyer are received within a predetermined time. In the present embodiment, the delivery can be confirmed based on that the buyer actively sends an arrival notification to the shopping platform 110, or the logistics company sends an arrival notification after the shipment is successfully delivered to the buyer, and the present disclosure is not limited thereto. As mentioned above, the shopping platform 110 uses the predetermined time counted by the counter 115 as a period of time to trace the delivery and collection procedures of the ordered merchandise to confirm whether the buyer receives successfully the ordered merchandise, thereby avoiding shopping disputes over the shipment procedures between the buyer and the seller.

When the shopping platform 110 receives the delivery and collection notice and the buyer information sent by the buyer within the predetermined time, the buyer completes the delivery and collection procedures of the ordered merchandise. After that, the shopping platform 110 activates the counter 115 disposed therein to count a cooling-off period (e.g. within seven days) which is served as a period of time for tracing a customer satisfaction degree. If the shopping platform 110 does not receive the delivery and collection notice and the buyer information sent by the buyer within the predetermined time, it means that the buyer does not complete the delivery and collection procedures of the ordered merchandise yet. The shopping platform 110 continues to trace the delivery and collection procedures of the ordered merchandise.

After the buyer completes the delivery and collection procedures of the ordered merchandise, when the shopping platform 110 receives a customer satisfaction degree before expiration of the cooling-off period, it means that the buyer satisfies the ordered merchandise and a return of the merchandise to the seller is unnecessary. Consequently, the shopping platform 110 instructs the third party financial host 120 to transfer the transaction amount to the seller, or the shopping platform 110 instructs actively the third party financial host 120 to transfer the transaction amount to the seller after expiration of the cooling-off period.

When the buyer is unsatisfied with the ordered merchandise and returns it to the seller before expiration of the cooling-off period (e.g. within seven days), the shopping platform 110 instructs the third party financial host 120 to return the transaction amount to the buyer (i.e. a refund to the buyer), which indicates that the buyer is unsatisfied with the ordered merchandise. As mentioned above, the shopping platform 110 uses a cooling-off period counted by the counter 115 as a period of time to trace the customer satisfaction degree of the buyer, thereby avoiding shopping disputes over the delivery and collection procedures between the buyer and the seller.

It is noteworthy to mention that the shopping platform 110 instructs the third party financial host 120 to respectively return the guarantee money to the buyer and the seller when the transaction amount is transferred to the seller, or the shopping platform 110 instructs the third party financial host 120 to return the guarantee money to the buyer when the buyer withdraws from the shopping platform 110, or the shopping platform 110 instructs the third party financial host 120 to return the guarantee money to the seller when the seller withdraws from the shopping platform 110, and the present disclosure is not limited thereto.

As mentioned above, the buyer and the seller can deposit the guarantee money to the third party financial host 120 before or after the online transactions are completed, and the third party financial host 120 respectively returns the guarantee money to the buyer and the seller when the buyer confirms that the ordered merchandise has been successfully delivered, so that the risk of fraudulent buyers and sellers can be minimized to protect the financial transaction between both parties.

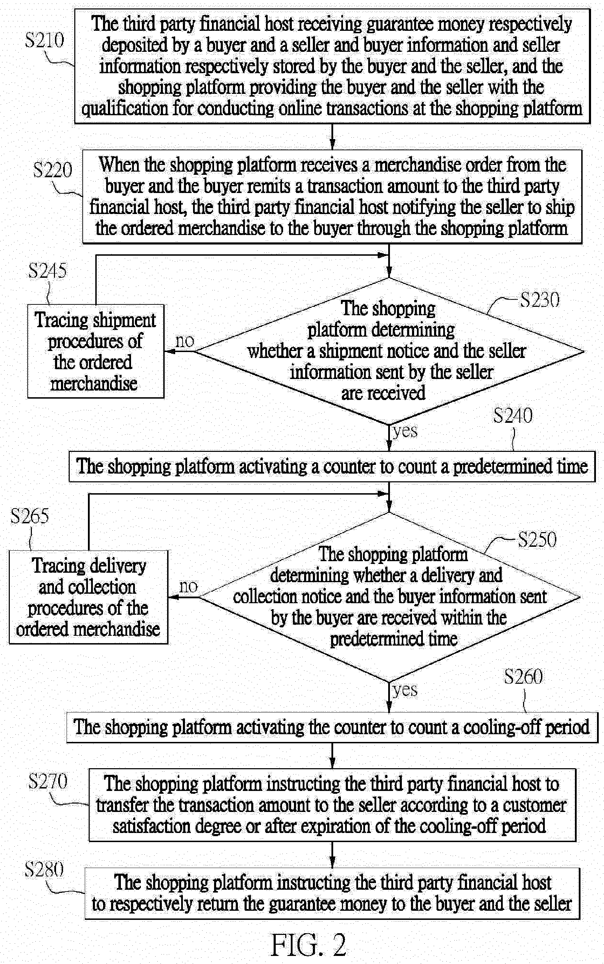

According to the aforementioned embodiments, the present disclosure further provides a transaction method of online shopping adapted to a transaction system 100. Reference is made FIG. 2 and FIG. 1 together, wherein FIG. 2 is a flow chart illustrating a transaction method of online shopping of an embodiment of the present disclosure. The method includes the following steps: in the transaction system 100, the third party financial host 120 receiving guarantee money respectively deposited by a buyer and a seller and buyer information and seller information respectively stored by the buyer and the seller, and the shopping platform 110 provides the buyer and the seller with the qualification for conducting online transactions at the shopping platform 110 (step 210). Here, the timing of the buyer and the seller respectively depositing the guarantee money and storing the buyer information and the seller information to the third party financial host 120 has been described in the former embodiment, and unnecessary details are therefore not repeated herein.

When the shopping platform 110 receives a merchandise order from the buyer and the buyer remits a transaction amount to the third party financial host 120, the third party financial host 120 notifies the seller to ship the ordered merchandise to the buyer through the shopping platform 110 (step 220). Here, the detail with respect to step 220 has been described in the former embodiment, and unnecessary details are therefore not repeated herein.

After that, the shopping platform 110 determines whether a shipment notice and the seller information sent by the seller are received (step 230). If the determination is positive, it means that the seller completes the shipment procedures, and then the shopping platform 110 activates the counter 115 to count a predetermined time (step 240). If the determination is negative, it means that the seller does not complete the shipment procedures yet, and the shopping platform 110 continues to trace the shipment procedures of the ordered merchandise (step 245), and returns to step 230.

In step 245, the shopping platform 110 traces the delivery schedule, and notifies the seller whether to re-ship the ordered merchandise to the buyer or not depending on the delivery confirmation. Here, the shopping platform 110 can trace the delivery schedule by contacting with the logistics or through other manners, and the present disclosure is not limited thereto.

After the seller completes the shipment procedures (i.e. step 240), the shopping platform 110 further determines whether a delivery and collection notice and the buyer information sent by the buyer are received within a predetermined time (step 250). If the determination is positive, it means that the buyer completes the delivery and collection procedures of the ordered merchandise. Then, the shopping platform 110 activates the counter 115 to count a cooling-off period (step 260). If the determination is negative, it means that the buyer does not complete the delivery and collection procedures of the ordered merchandise yet, and the shopping platform 110 continues to trace the delivery and collection procedures of the ordered merchandise (step 265), and returns to step 250.

After the buyer completes the delivery and collection procedures of the ordered merchandise (step 260), the shopping platform 110 instructs the third party financial host 120 to transfer the transaction amount to the seller according to a customer satisfaction degree or after expiration of the cooling-off period to complete the financial transaction between both parties (step 270).

In step 270, the third party financial host 120 transfers the transaction amount to the seller according to a customer satisfaction degree or after expiration of the cooling-off period to complete the financial transaction between both parties. Here, the detail with respect to step 270 has been described in the former embodiment, and unnecessary details are therefore not repeated herein.

After the third party financial host 120 transfers the transaction amount to the seller (i.e. step 270), the shopping platform 110 instructs the third party financial host 120 to respectively return the guarantee money to the buyer and the seller (step 280). Here, the timing of the third party financial host 120 respectively returning the guarantee money to the buyer and the seller has been described in the former embodiment, and unnecessary details are therefore not repeated herein.

Accordingly, by means of the transaction method of online shopping of the present embodiment, the risk of fraudulent buyers and sellers can be minimized to protect the financial transaction between both parties.

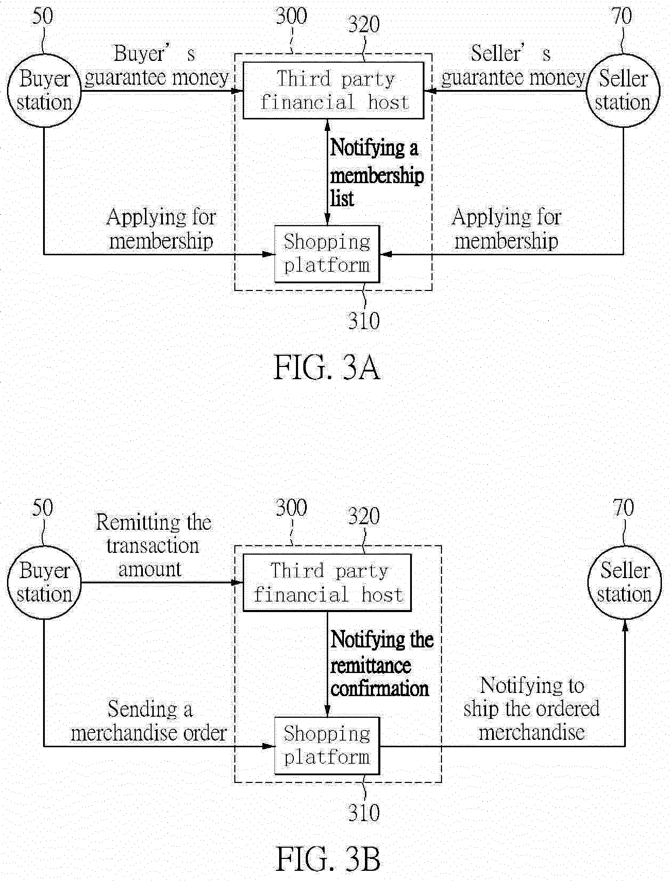

In the following embodiment, membership fees of a buyer and a seller are used as the guarantee money for illustration. As shown in FIG. 3A, in a transaction system 300, the buyer sends the buyer information to the shopping platform 310 for applying for membership of a shopping platform 310 through the buyer station 50 and the seller sends the seller information to the shopping platform 310 for applying for membership of the shopping platform 310 through the seller station 70. When the membership applications pass, the shopping platform 310 sends a membership list to a third party financial host 320. After that, the buyer remits the membership fee to the third party financial host 320 as the guarantee money through the buyer station 50 and the seller remits the membership fee to the third party financial host 320 as the guarantee money through the seller station 70, and the third party financial host 320 informs the shopping platform 310 that both the parties are qualified to conduct online transactions at the shopping platform 310.

As shown in FIG. 3B, the buyer orders desired merchandise at the shopping platform 310 and remits the transaction amount to the third party financial host 320 through the buyer station 50, and the third party financial host 320 notifies the shopping platform 310 that the remittance is confirmed. After that, the shopping platform 310 notifies the seller to ship the ordered merchandise to the buyer, and the seller accordingly arranges a shipment to the buyer. Then, the shopping platform 310 further determines whether a shipment notice and the seller information sent by the seller are received, thereby ensuring the completion of the seller's shipment procedures.

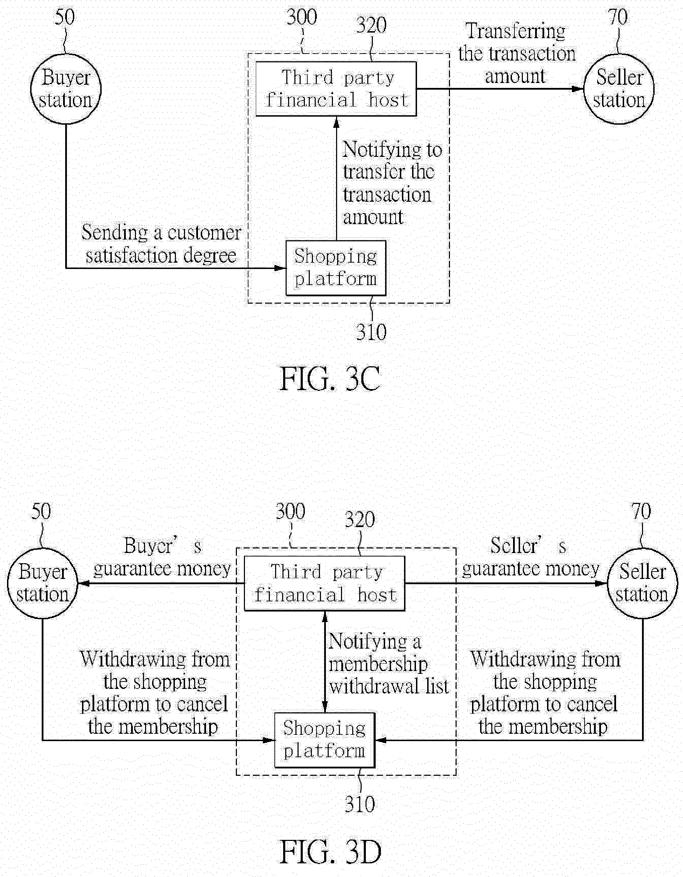

After the seller completes the shipment procedures as shown in FIG. 3C, the shopping platform 310 further determines whether a delivery and collection notice and the buyer information are received within a predetermined time (i.e. within five days), thereby ensuring the completion of the buyer's delivery and collection procedures of the ordered merchandise. When the shopping platform 310 confirms that the shipment has been successfully delivered to the buyer (i.e. the buyer completes the delivery and collection procedures of the ordered merchandise), the buyer represents a customer satisfaction degree to the shopping platform 310 through the buyer station 50 before expiration of the cooling-off period to express that the ordered merchandise meets the buyer's satisfaction and is not returned. Or when the cooling-off period expires, it means that the buyer satisfies the merchandise and a return of the merchandise to the seller is unnecessary. After that, the shopping platform 310 notifies the third party financial host 320 that the transaction amount can be transferred to the seller, and the third party financial host 320 accordingly transfers the transaction amount to the seller station 70.

As shown in FIG. 3D, after the transaction amount is transferred to the seller station 70 by the third party financial host 320, the buyer can withdraw from the shopping platform 310 to cancel the membership through the buyer station 50, and the seller also can withdraw from the shopping platform 310 to cancel the membership through the seller station 70. After that, the shopping platform 310 sends a membership withdrawal list to the third party financial host 320, and the third party financial host 320 respectively returns the guarantee money to the buyer and the seller according to the membership withdrawal list.

In summary, a buyer and a seller respectively deposit guarantee money (or membership fee) to a third party financial institution and store information (e.g. security authentication code or biometric recognition information) used to identify the buyer and the seller to the third party financial institution in advance, and a shopping platform provides the buyer and the seller with the qualification for conducting online transactions at the shopping platform. After the online transactions are completed (i.e., the transactions between the buyer and the seller are correctly completed), the third party financial institution respectively returns the guarantee money (or the deposited membership fee) to the buyer and the seller. Accordingly, a transaction method of online shopping and a transaction system thereof provided by the present disclosure is advantageous to minimize the risk of fraudulent buyers and sellers, thereby protecting financial transactions conducted between the both parties.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A transaction method of online shopping adapted to a transaction system (100, 300), comprising a shopping platform (110, 310) and a third party financial host (120, 320), wherein the method comprises the following steps:
(a) a buyer and a seller respectively depositing guarantee money and storing buyer information and seller information to the third party financial host (120, 320), and the shopping platform (110, 310) providing the buyer and the seller with the qualification for conducting online transactions at the shopping platform (110, 310);
(b) after the buyer orders desired merchandise at the shopping platform (110, 310) and remits a transaction amount to the third party financial host (120, 320), the third financial host (120, 320) notifying the seller to ship the ordered merchandise to the buyer through the shopping platform (110, 310);
(c) the shopping platform (110, 310) determining whether a shipment notice and the seller information sent by the seller are received; if the determination is positive, the shopping platform (110, 310) activating a counter (115) to count a predetermined time;
(d) the shopping platform (110, 310) determining whether a delivery and collection notice and the buyer information sent by the buyer are received within the predetermined time; if the determination is positive, the shopping platform (110, 310) activating the counter (115) to count a cooling-off period;
(e) when the shopping platform (110, 310) receives a customer satisfaction degree within the cooling-off period or after expiration of the cooling-off period, the shopping platform (110, 310) instructing the third party financial host (120, 320) to transfer the transaction amount to the seller; and
(f) the shopping platform (110, 310) instructing the third party financial host (120, 320) to respectively return the guarantee money to the buyer and the seller.

2. The transaction method of online shopping according to claim 1, wherein when the shopping platform (110, 310) receives a merchandise order from the buyer, step (a) is executed.

3. The transaction method of online shopping according to claim 1, wherein in step (c), if the shopping platform (110, 310) determines that a delivery and collection notice and the buyer information sent by the buyer are not received within the predetermined time, the shopping platform (110, 310) continues to trace shipment procedures, and re-executes step (c).

4. The transaction method of online shopping according to claim 1, wherein in step (d), if the shopping platform (110, 310) determines that a delivery and collection notice and the buyer information sent by the buyer are not received within the predetermined time, the shopping platform (110, 310) continues to trace delivery and collection procedures, and re-executes step (d).

5. The transaction method of online shopping according to claim 1, wherein in step (e), when the buyer is unsatisfied with the ordered merchandise and returns it to the seller before expiration of the cooling-off period, the shopping platform (110, 310) instructs the third party financial host (120, 320) to return the transaction amount to the buyer.

6. The transaction method of online shopping according to claim 1, wherein when the third party financial host (120, 320) transfers the transaction amount to the seller, step (f) is executed.

7. The transaction method of online shopping according to claim 1, wherein in step (f), when the buyer withdraws from the shopping platform (110, 310) to cancel membership, the shopping platform (110, 310) instructs the third party financial host (120, 320)to return the guarantee money to the buyer, and when the seller withdraws from the shopping platform (110, 310) to cancel membership, the shopping platform (110, 310) instructs the third party financial host (120, 320)to return the guarantee money to the seller.

8. A transaction system (100, 300) of online shopping, comprising:
a shopping platform (110, 310) connected to a buyer station (50) and a seller station (70), and
a third party financial host (120, 320) connected to the buyer station (50), the seller station (70) and the shopping platform (110, 310), and receiving guarantee money respectively deposited by a buyer and a seller and buyer information and seller information respectively stored by the buyer and the seller, and the shopping platform (110, 310) providing the buyer and the seller with the qualification for conducting online transactions at the shopping platform (110, 310);
wherein after the buyer orders desired merchandise at the shopping platform (110, 310) and remits a transaction amount to the third party financial host (120, 320), the third financial host (120, 320) notifies the seller to ship the ordered merchandise to the buyer through the shopping platform (110, 310), and the shopping platform (110, 310) is used to execute the following steps:
(a) determining whether a shipment notice and the seller information sent by the seller are received; if the determination is positive, the shopping platform (110, 310) activating a counter (115) to count a predetermined time;
(b) determining whether a delivery and collection notice and the buyer information sent by the buyer are received within the predetermined time; if the determination is positive, the shopping platform (110, 310) activating the counter to the count (115) a cooling-off period;
(c) when the shopping platform (110, 310) receives a customer satisfaction degree within the cooling-off period or after expiration of the cooling-off period, the shopping platform (110, 310) instructing the third party financial host (120, 320) to transfer the transaction amount to the seller; and
(d) the shopping platform (110, 310) instructing the third party financial host (120, 320) to respectively return the guarantee money to the buyer and the seller.;

9. The transaction system (100, 300) of online shopping according to claim 8, wherein when the shopping platform (110, 310) receives a merchandise order from the buyer, the third party financial host (120, 320) receives the guarantee money respectively deposited by the buyer and the seller, and the shopping platform (110, 310) provides the buyer and the seller with the qualification for conducting online transactions at the shopping platform (110, 310).

10. The transaction system (100, 300) of online shopping according to claim 8, wherein when the buyer is unsatisfied with the ordered merchandise and returns it to the seller before expiration of the cooling-off period, the shopping platform (110, 310) instructs the third party financial host (120, 320) to return the transaction amount to the buyer.
